# EUROPEAN PATENT APPLICATION

(11) **EP 0 913 817 A2**
(43) Date of publication of application: **06.05.1999**
(21) Application number: 98117144.0
(22) Date of filing: 10.09.1998
(51) Int. Cl.: G11B 7/135, G11B 7/09

(54) **Optical data storage device with simplified light path adjustment of optical system**

(30) Priority: 31.10.1997 JP 301303/97
(71) Applicant: FUJITSU LIMITED, Kawasaki-shi, Kanagawa 211-8588 (JP)
(72) Inventor: Saito, Hidenori, Nakahara-ku, Kawasaki-shi, Kanagawa 211 (JP); Aoki, Jun, Nakahara-ku, Kawasaki-shi, Kanagawa 211 (JP); Teraoka, Takeo, Nakahara-ku, Kawasaki-shi, Kanagawa 211 (JP); Kataoka, Masahiko, Nakahara-ku, Kawasaki-shi, Kanagawa 211 (JP); Kato, Masayoshi, Nakahara-ku, Kawasaki-shi, Kanagawa 211 (JP); Mizuishi, Kazuyuki, Nakahara-ku, Kawasaki-shi, Kanagawa 211 (JP)
(74) Representative: Seeger, Wolfgang, Dipl.-Phys.

(57) **Abstract**

An optical disk device constituting a kind of optical data storage device is disclosed, in which the noise characteristic of the optical system is improved, while at the same time improving the accuracy of the parts for laser beam path adjustment and the accuracy of adjustment for a lower cost. For this purpose, the optical disk device comprises an optical system having the functions of irradiating the laser beam from a laser beam source on an optical disk, splitting a reflected laser beam into a plurality of beams, and detecting from each of the laser beams thus produced the on/off state of the laser beam source, the data signal recorded in said optical disk, the focus state of the laser beam on the optical disk and the track of the optical disk irradiated with the laser beam. The laser beam focus state detection system includes a wave surface splitting element for splitting the return laser beam into at least two laser beams, a detection lens for concentrating the laser beams emitted from the wave surface splitting element, and a focus state detection sensor for detecting whether or not the laser beam is correctly focused on the recording surface of the optical disk based on the laser beams produced from the detection lens.

## Description

### BACKGROUND OF THE INVENTION

### 1. Field of the Invention

The present invention relates to an optical data storage device, or more in particular to an optical data storage device for an optical system of a magneto-optical disk device, in which the adjustment of parts for splitting the light path of the laser beam is facilitated and the system performance is improved while, at the same time, the production cost is reduced.

### 2. Description of the Related Art

Magneto-optical disks (hereinafter referred to simply as "the optical disk") find wide application as an optical data storage device. In the optical system of the optical disk, the light emitted from a laser beam source including a laser diode is applied to a collimator lens or an object lens, in which the light path is adjusted. The light is then irradiated on an optical disk making up a recording medium, and the light returning from the optical disk is split by a splitter, so that the servo signal or the data signal contained in the return light is detected by a corresponding sensor. In this case, for irradiating the return light correctly on the detection sensors, the optical system includes a lens for adjusting the light path and a device for splitting the wave surface. The conventional wave surface splitter has two tapered surfaces whereby the return light is split.

The return light split by the wave surface splitter is sent to a focus state detection sensor having four sensors where the focus state of the light is detected. The four sensors are divided into two pairs of two sensors. When the sectional profile of the return light is detected, the laser beam is required to be irradiated uniformly on the two sensors of each set. For this purpose, the wave surface splitter is adjusted.

In the optical system for the conventional optical disk device having the above-mentioned configuration, the wave surface splitter is in the stage after the detection lens. In the case where the light axis of the detection lens deviates from the light axis of the return light, therefore, the deviation of the return light on the wave surface splitter is aggravated. The resultant problem is that a considerable accuracy is required for adjusting the wave surface splitter while at the same time making it necessary to secure-the accuracy of the parts of the detection lens.

Other problems posed by the conventional system are that noise is generated by the stray capacitance of the circuit system for amplifying the output of the sensor for receiving the return light and the parts of the optical system are bulky.

### SUMMARY OF THE INVENTION

A first object of the present invention is to provide an optical data storage device for which the adjustment accuracy and the accuracy of the parts can be improved to thereby reduce the production cost.

A second object of the invention is to improve the performance of an optical data storage device by reducing the noise in the output circuits of a data signal detection sensor and a servo signal detection sensor of the optical system of an optical data storage device.

A third object of the invention is to secure the performance and simplify the structure of a monitor optical system for a laser beam source of the optical data storage device required for high-frequency band control of the laser beam source and to reduce the system cost by a simplification of the adjustment of the optical system.

In order to achieve the above-mentioned objects, according to the present invention, there is provided an optical data storage device comprising an optical system including means for irradiating a laser beam onto an optical storage medium from a laser beam source, means for splitting the beam reflected and returned from the optical storage medium into a plurality of beams, and means having the function of detecting the on/off state of the laser beam source, the data signal recorded in the optical storage medium, the focus state of the laser beam on the optical storage medium and the track of the optical storage medium irradiated with the laser beam from each of the split beams, wherein the laser beam focus state detection system includes a wave surface splitter for splitting the return beam into at least two beams, a detection lens for concentrating the beams emitted from the wave surface splitter, and a focus state detection sensor for detecting from the beam from the detection lens whether the laser beam is focused correctly on the recording surface of the optical storage medium.

An optical system having this configuration according to a first aspect comprises a laser beam source for irradiating a laser beam onto an optical storage medium, a first beam splitter for splitting the beam emitted from the laser beam source and the beam returned from the optical storage medium, a second beam splitter for splitting one of the return beams produced from the first beam splitter into two beams, a data detection system for detecting the data signal recorded in the optical storage medium from one of the beams produced from the second beam splitter, and a servo detection system for detecting the servo signal recorded in the optical storage medium from the other beam produced from the second beam splitter, wherein the servo detection system includes a third beam splitter for splitting each return beam into two beams, a track detection system for detecting a track of the optical storage medium from one of the beams produced from the third beam splitter, and a focus state detection system for detecting the focus of the beam irradiated on the optical storage medium from the other beam produced from the third beam splitter.

With the configuration of the optical system according to the first form, the detection lens for concentrating the laser beam is arranged after the wave surface splitter. Therefore, the accuracy requirement the parts for splitting the laser beam can be relaxed while at the same time facilitating the adjustment of the wave surface splitter.

The wave surface splitter can be mounted integrally with the second beam splitter or can be mounted on the detection lens holder.

In this way, the adjustment of the wave surface splitter is eliminated or the wave surface splitter can be adjusted as a unit, thereby shortening the production time for the optical disk.

An optical system having the above-mentioned configuration according to a second aspect comprises a laser beam source for irradiating a laser beam on an optical storage medium, a first beam splitter for splitting the beam emitted from the laser beam source and the beam returned from the optical storage medium, a polarization beam splitter for splitting one of the return beams produced from the first beam splitter into two beams, a wave surface splitter for splitting each of the two beams produced from the polarization beam splitter into three beams, and a data/servo detector for detecting the data signal and the servo signal recorded in the optical storage medium from the six beams produced from the wave surface splitter, wherein the first beam splitter, the polarization beam splitter, the wave surface splitter, the detection lens and the data/servo detector are aligned, and wherein the data/servo detector includes one of a multiplicity of sensors for detecting the servo signal and the data signal from the optical storage medium.

With the configuration of the optical system according to the second aspect, the first beam splitter, the polarization beam splitter, the wave surface splitter and the detection lens can be housed in an optical head base.

In this case, the configuration of the optical system for the data detection system and the servo detection system is simplified to reduce the cost of the system.

In the configuration of the optical system according to the second aspect described above, the first beam splitter, the polarization beam splitter and the wave surface splitter can be formed integrally with each other, or the wave surface splitter can be incorporated into the detection lens holder to form a movable unit, so that the movable unit is incorporated slidably into a fixed unit having the data/servo detector mounted at an end thereof, and the focus of the laser beam emitted from the detection lens is adjusted on the data/servo detector by moving the movable unit.

The integral configuration of the first beam splitter, the polarization beam splitter and the wave surface splitter can simplify the assembly work of the optical system of the optical data storage device.

Further, in the configurations of the optical system according to both the first and second aspects, the sensors for detecting the data signal, the focus state and the track can be arranged on the same flexible board as an amplifier for amplifying the output signal from these sensors, and the substrate portion printed with the signal line from the sensors up to the amplifier can be composed of a single-layer board.

These configurations can reduce the amount of noise caused by the stray capacitance of the output signal line of the sensors.

### BRIEF DESCRIPTION OF THE DRAWINGS

The present invention will be more clearly understood from the description as set forth below with reference to the accompanying drawings, in which:
Fig. 1 is a diagram showing a configuration of an optical system of a conventional optical disk device;
Fig. 2A is a perspective view showing a configuration of the wave surface splitter shown in Fig. 1;
Fig. 2B is a front view showing a configuration of the focus detection sensor shown in Fig. 1;
Fig. 2C is a front view showing a configuration of the track detection sensor shown in Fig. 1;
Fig. 2D is a front view showing a configuration of the data detection sensor shown in Fig. 1;
Fig. 3 is a diagram for explaining the adjustment of the wave surface splitter made in such a manner that the center of the return beam from the optical disk coincides with the center line of the wave surface splitter of Fig. 1; Fig. 4 is a diagram showing a configuration of an optical system of an optical disk device according to a first embodiment of the invention;
Fig. 5A is a block diagram showing a modification of an optical system of the optical disk device of Fig. 4.
Fig. 5B is a block diagram showing another modification of an optical system of the optical disk device of Fig. 4;
Fig. 6 is a schematic sectional view showing a specific configuration of an optical disk device according to a second embodiment of the invention;
Fig. 7 is a perspective view showing the light path from the polarization beam splitter to the servo/data detection sensor in Fig. 6;
Fig. 8A is an exploded perspective view showing an integrated configuration of the beam splitter, the polarization beam splitter and the wave surface splitter of Fig. 7;
Fig. 8B is a side view showing an assembled state of the parts shown in Fig. 8A;
Fig. 9A is a perspective assembly view showing an integrated configuration of the wave surface splitter and the detection lens of Fig. 7;
Fig. 9B is a side sectional view showing a configuration in which the integrated assembly of the wave surface splitter and the detection lens is incorporated movably before the servo/data detection sensor;
Fig. 10 is a characteristic diagram showing the relation between the input capacitance and the noise of the servo/data detection sensor according to the invention;
Fig. 11A is a plan view showing a part of the surface of the board for mounting the servo/data detection sensor according to the invention;
Fig. 11B is a perspective view of a back-side pattern taken from the front side of the mounting board shown in Fig. 11A according to the invention;
Fig. 11C is a perspective view of a back-side pattern taken from the front side of the mounting board shown in Fig. 11A according to the prior art;
Fig. 12 is a characteristic diagram showing a comparison of the noise distributions generated by the patterns of Figs. 11B and 11C;
Fig. 13A is a partly enlarged side sectional view showing the laser beam source monitor sensor of Fig. 6 integrated with a condenser lens as a unit together with a part of the optical head base according to an embodiment;
Fig. 13B is a rear view of the unit shown in Fig. 13A; and
Fig. 14 is a diagram for explaining the light path of the laser light source monitor unit and the position of the light attenuator shown in Fig. 13A.

### DESCRIPTION OF THE PREFERRED EMBODIMENTS

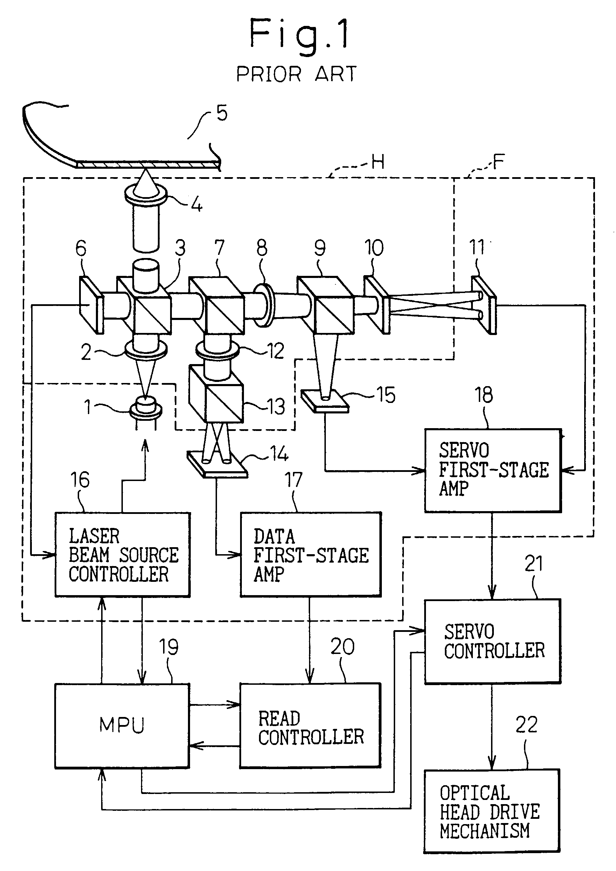

Before describing the preferred embodiments, an explanation will be given of the conventional optical system of an optical disk device shown in Figs. 1 to 3.

Fig. 1 shows an optical system of a conventional optical disk device. The configuration of the optical system of this conventional optical disk device will be explained sequentially along the light path of the laser beam.

In the optical system of the optical disk device, the laser beam emitted from a laser beam source 1 including a single laser diode is converted into substantially parallel beams by a collimator lens 2, passed through a beam splitter 3 made of a prism, reduced by an object lens, and then proceeds toward an optical disk 5 constituting a recording medium. In the beam splitter 3, the a small amount of the light beam is split leftward of the drawing, and enters a laser beam source monitor sensor 6 made of a photo-diode. The laser beam source monitor sensor 6 detects the on/off state of the laser beam source 1. The output of the laser beam source monitor sensor 6 is applied to a laser beam source controller 16 for controlling the operation of the laser beam source 1.

The laser beam reflected and returned from the surface of the optical disk 5, on the other hand, is passed through the object lens 4, reflected on the beam splitter 3 rightward and enters a beam splitter 7 made of a prism. The laser beam that has entered the beam splitter 7 is split into two laser beams having a position component (P component) and a signal component (S component), respectively.

The P-component laser beam proceeds straight ahead, is focused by a detection lens 8, and enters a beam splitter 9 in which it is split into two laser beams. One of the laser beams produced in the beam splitter 9, which is used for focusing, is split into two beams by a wave surface splitter 10 and enters the focus state detection sensor 11. The other one of the laser beams produced in the beam splitter 9, on the other hand, which is for detecting a track of the optical disk, enters a track detection sensor 15. The detection output of the focus state detection sensor 11 and the detection output of the track detection sensor 15 are amplified by a servo first-stage amplifier 18 and enters a servo controller 21.

The S-component laser beam produced by splitting in the beam splitter 7 is passed through a detection lens 12 located under the beam splitter 7, and enters a polarization beam splitter 13 composed of a Wollaston prism. The laser beam is split into two laser beams by the polarization beam splitter 13 and enters a data detection sensor 14. The data detection sensor 14 is for detecting the polarization plane of the beam and reading the data. The output of the data detection sensor 14 passes through the data first-stage amplifier 17 and enters a read controller 20.

In the above-mentioned configuration, the laser beam source controller 16, the read controller 20 and the servo controller 21 exchange signals with an MPU 19. The section defined by dashed line H in Fig. 1 represents an optical head, and the section defined by dashed line F represents a flexible board connected to the optical head H or a portion mounted on a miniature board. The optical head H is movable by an optical head drive mechanism 22 so that it can access the optical disk 5. The optical head drive mechanism 22 is driven by the servo controller 21.

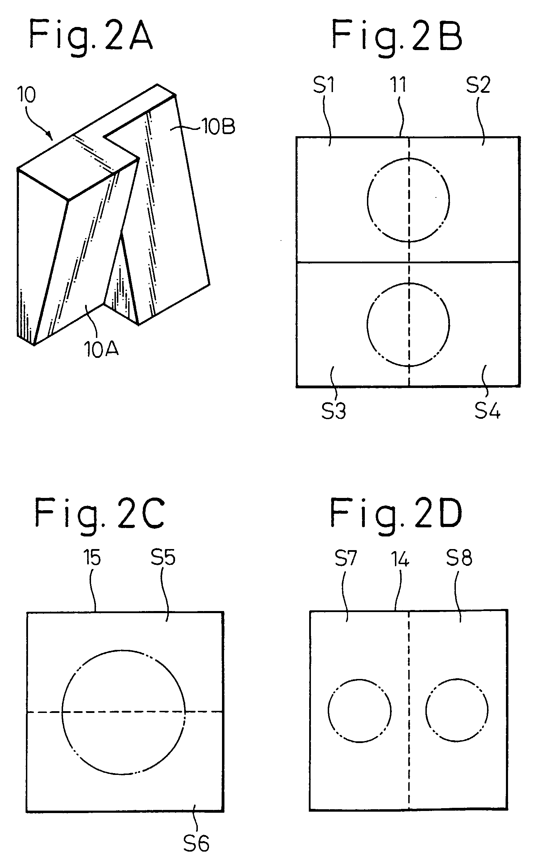

Fig. 2A shows a configuration of the wave surface splitter 10 of Fig. 1. The conventional wave surface splitter 10 has two tapered surfaces 10A, 10B by which the laser beam is split.

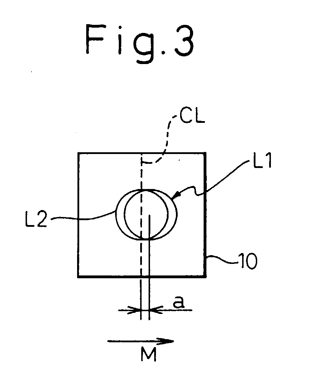

Fig. 2B is a front view showing a configuration of the focus state detection sensor 22 of Fig. 1. The focus state detection sensor 11 includes four sensors S1 to S4 for detecting the focus state by detecting the sectional profile of the laser beam. The four sensors S1 to S4 are divided into a set including the sensors S1, S2, and the other set including the sensors S3, S4. For detecting the sectional profile of the laser beam, the laser beam is required to be irradiated uniformly on the two sensors of each set. This requires the adjustment of the wave surface splitter 10. As shown in Fig. 3, for example, assume that the laser beam incident to the wave surface splitter 10 deviates by a distance a off the center line CL of the wave surface splitter 10 as indicated by a symbol L1. In the prior art, the wave surface splitter 10 is driven along the arrow M to a point L2 where the center of the laser beam coincides with the center line CL.

Fig. 2C is a front view showing a configuration of the track detection sensor 15 of Fig. 1. The track detection sensor 15 includes two sensors S5, S6 for detecting the track of the optical disk irradiated with the laser beam. Fig. 2D is a front view showing a configuration of the data detection sensor 14 of Fig. 1. The data detection sensor 14 includes two sensors S7, S8 for detecting the polarization plane of the laser beam and reading data.

In the optical system of the conventional optical disk device having the above-mentioned configuration, the wave surface splitter 10 is arranged in a stage downstream of the detection lens 8. In the case where the optical axis of the detection lens 8 deviates off from the optical axis of the return beam, therefore, the deviation of the return beam on the wave surface splitter 10 is aggravated. The adjustment of the wave surface splitter, therefore, requires a considerable accuracy, and also the parts of the detection lens 8 are required to have a high accuracy.

Now, specific embodiments of the present invention will be described in detail with reference to the accompanying drawings. The same component members of the optical system of the optical disk device according to the invention as the corresponding component members of the conventional optical system will be designated by the same reference numerals, respectively.

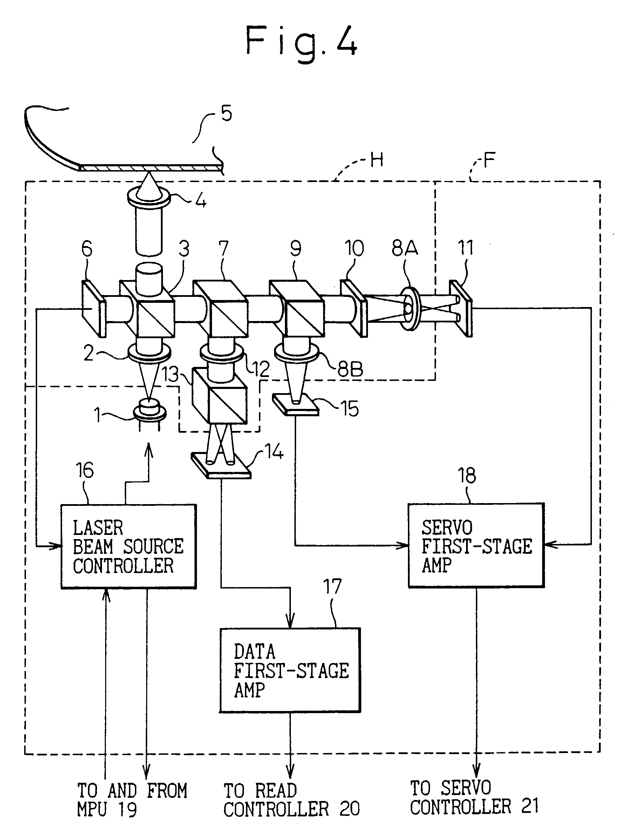

Fig. 4 is a diagram showing the essential parts of the configuration of the optical system of an optical disk device according to a first embodiment of the invention. The configuration of the optical system of the optical disk device according to the first embodiment will be described sequentially along the path of the laser beam.

A laser beam emitted from the laser beam source 1 including a single laser diode is converted into substantially parallel beams by the collimator lens 2, passes through the beam splitter 3 made of a prism, is reduced by the object lens 4 and proceeds toward the optical disk 5. In the beam splitter 3, only a slight amount of light is split off leftward and enters the laser beam source monitor sensor 6 made of a photo-diode. The laser beam source monitor sensor 6 detects the on/off state of the laser beam source 1. The output of the laser beam source monitor sensor 6 enters the laser beam source controller 16 for controlling the operation of the laser beam source 1.

The laser beam reflected and returned from the surface of the optical disk 5, on the other hand, passes through the object lens 4, is reflected rightward on the beam splitter 3 and enters the beam splitter 7 made of a prism. The laser beam that has entered the beam splitter 7 is split into two laser beams having a positional component (P component) and a signal component (S component), respectively.

The laser beam of the S component produced from the beam splitter 7 is passed through the detection lens 12 under the beam splitter 7 and enters the polarization beam splitter 13 including a Wollast prism. The laser beam is split into two beams by the polarization beam splitter 13 and enters the data detection sensor 14. The data detection sensor 14 is for detecting the polarization plane of the beam and reading data. The output of the data detection sensor 14 is passed through the data first-stage amplifier 17 and enters the read controller 20 not shown.

The configuration up to this stage is identical to that of the corresponding parts of the optical system of the conventional optical disk device. The first embodiment is different from the optical system of the conventional optical disk device of Fig. 1 in that the detection lens 8 between the beam splitter 7 and the beam splitter 9 is eliminated.

Thus, the laser beam of the P component that is produced from the beam splitter 7 proceeds straight ahead and directly enters the beam splitter 9, in which it is further split into two beams. One of the laser beams produced from the beam splitter 9, which is used for focusing, is split into two beams by the wave surface splitter 10, reduced by a detection lens 8A which is newly inserted in this embodiment, and then enters the focus state detection sensor 11. The other beam produced from the beam splitter 9, on the other hand, which is used for track detection, is reduced by a detection lens 8A which is also newly inserted in this embodiment, enters the track detection sensor 15. The detection output of the focus detection sensor 11 and the detection output of the track detection sensor 15 are both amplified by the servo first-stage amplifier 18 and enter the servo controller 21 not shown.

Also in the optical system of the optical disk device having the configuration described above, the laser beam source controller 16, the read controller 20 not shown and the servo controller 21 exchange signals with the MPU 19 in the same manner as in the conventional optical system described with reference to Fig. 1.

In Fig. 4, the section defined by dashed line H represents an optical head, and the section defined by dashed line F represents a flexible board connected to the optical head H or the portion mounted on the miniature board. The optical head H is movable by an optical head drive mechanism not shown and accessible to the optical disk 5. The optical head drive mechanism is driven by the servo controller 21 not shown, as in the conventional optical system described above.

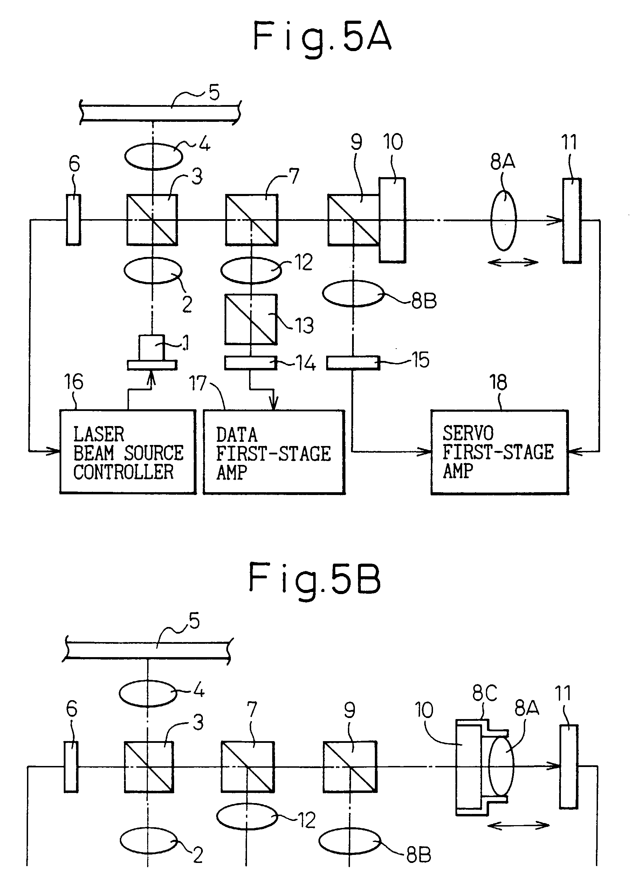

Although the wave surface splitter 10, which is independently arranged in the first embodiment of Fig. 4, can be formed integrally with the beam splitter 9 as shown in the modification of Fig. 5A or can be mounted on the holder 8C of the detection lens 8A as in the modification of Fig. 5B.

According to the embodiment shown in Figs. 4 to 5B, the laser beam is not reduced by a lens in the stage before the wave surface splitter 10. Therefore, the laser beam irradiated on the wave surface splitter 10 is not affected by any mechanical error such as the deflection of a lens. As a result, the accuracy requirement for production of the parts used for splitting the beam can be relaxed while at the same time facilitating the adjustment of the center of the laser beam to the center of the wave surface splitter 10.

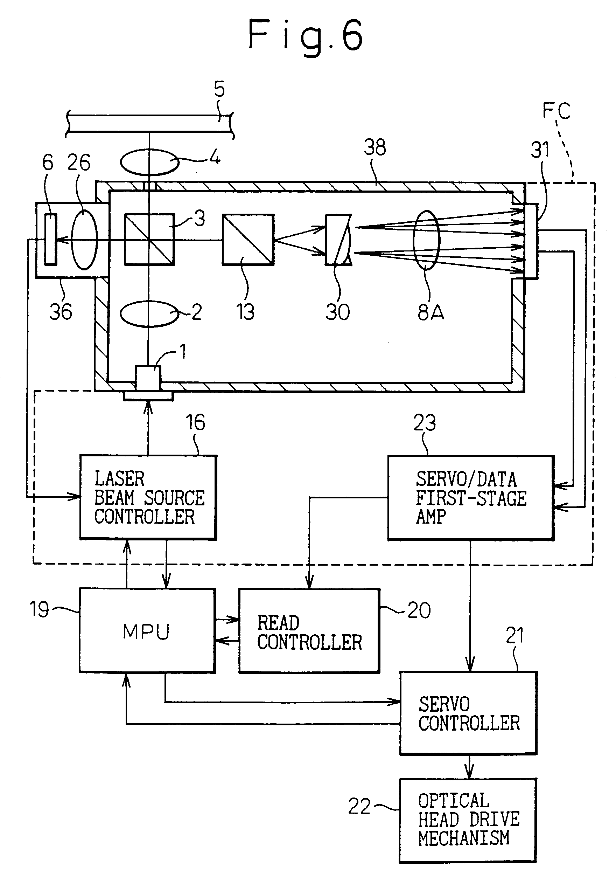

Fig. 6 is a sectional view schematically showing a specific configuration of an optical disk device according to a second embodiment of the invention. The configuration of the optical system of the optical disk device according to the second embodiment will be described, below, sequentially along the path of the laser beam.

The laser beam emitted from the laser beam source 1 is converted into substantially parallel beams by the collimator lens 2 and enters the beam splitter 3. In the beam splitter 3, a small amount of light is split off leftward in the drawing, while the remaining beam proceeds straight ahead, is reduced by the object lens 4, and is irradiated onto the optical disk 5. The beam split off leftward in the beam splitter 3, on the other hand, enters the laser beam source monitor sensor 6 through a condenser lens 26, so that the laser beam source monitor sensor 6 detects the on/off state of the laser beam source 1. The output of the laser beam source monitor sensor 6 enters the laser beam source controller 16 for controlling the operation of the laser beam source 1. The second embodiment, unlike the first embodiment, comprises the condenser lens 26 inserted between the beam splitter 3 and the laser beam source monitor sensor 6 to constitute a laser beam source monitor unit 36. The configuration of this laser beam source monitor unit 36 will be described in more detail later.

The laser beam reflected and returned from the surface of the optical disk 5 passes through the object lens 4 and reflected rightward in the beam splitter 3. According to the first embodiment, the beam reflected rightward in and returned from the beam splitter 3 enters the beam splitter 7. In the second embodiment, in contrast, a polarization beam splitter 13 inserted in place of the beam splitter 7 splits the laser beam into two beams, which are irradiated directly onto the wave surface splitter 30.

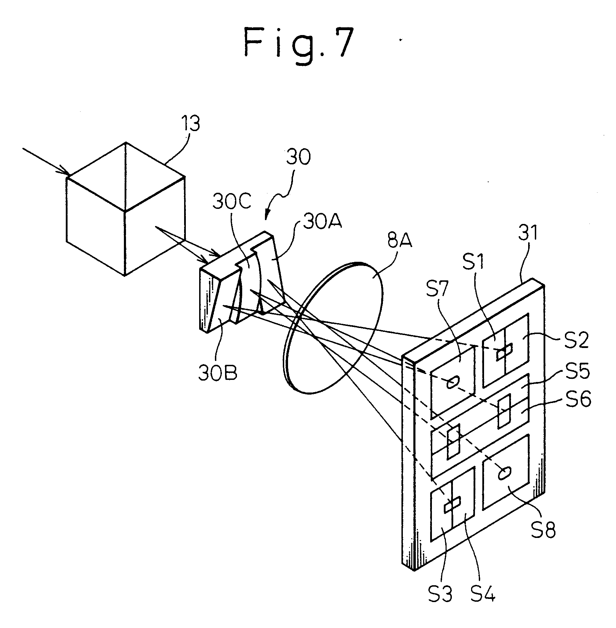

The wave surface splitter 10 in the first embodiment, as described with reference to Fig. 2A, is for splitting the incident laser beam into two laser beams. The wave surface splitter 30 according to the second embodiment, however, includes two tapered surfaces 30A, 30B and a curved surface 30C therebetween, and has the function of splitting the incident beam into three laser beams, as shown in Fig. 7. In view of the fact that the two laser beams produced by the polarization beam splitter 13 enter the wave surface splitter 30, each of the two beams is split into three laser beams, with the result that a total of six laser beams are produced from the wave surface splitter 30. All of these laser beams are passed through the detection lens 8A and enter the servo/data detection sensor 31.

The servo/data detection sensor 31, which receives all the six laser beams, is required to detect all the data signals and all the servo signals from the laser beams. Therefore, all the sensors S1 to S8 (Figs. 2B to 2D) described in the first embodiment are mounted on the servo/data detection sensor 31. The sensors S7, S8 included in this embodiment can be done without. In such a case, the set of the sensors S3, S4 is used instead of the sensor S7, and the set of the sensors S7, S8 instead of the sensor S8. Also, in the presence of the sensors S7, S8, the set of the sensors S3, S4, S7 can be used as the sensor S7, and the set of the sensors S1, S2, S8 as the sensor S8 with equal effect. The servo/data detection sensor 31 according to the second embodiment has all the functions of the focus state detection sensor 11, the data detection sensor 14 and the track detection sensor 15 of the first embodiment at the same time.

The detection output of the servo/data detection sensor 31 is applied to the servo/data first-stage amplifier 23 as shown in Fig. 6. The servo/data first-stage amplifier 23 has the functions of the data first-stage amplifier 17 and the servo first-stage amplifier 18 of the first embodiment at the same time. Therefore, the output of the servo/data first-stage amplifier 23 is applied to both the read controller 20 and the servo controller 21. The configuration and the connections of the MPU 19, the read controller 20, the servo controller 21 and the optical head drive mechanism 22 are identical to those of the optical system of the conventional optical disk device and therefore will not be described.

In the optical system of the optical disk device according to the second embodiment configured as described above, the collimator lens 2, the beam splitter 3, the detection lens 8A, the polarization beam splitter 13 and the wave surface splitter 30 are housed in the optical head base 38. The laser beam source 1, the servo/data detection sensor 31 and the laser beam source monitor unit 36 are mounted on the exterior of the optical head base 38. The section defined by dashed line FC represents the flexible board connected to the optical head base 38 or the portion mounted on the miniature substrate. According to the second embodiment, the optical head base 38 is moved by the optical head drive mechanism 22 and thus accesses the optical disk 5.

Also, the beam splitter 3, the polarization beam splitter 13 and the wave surface splitter 30 which are arranged independently of each other according to the second embodiment shown in Fig. 6 can alternatively be integrated with each other.

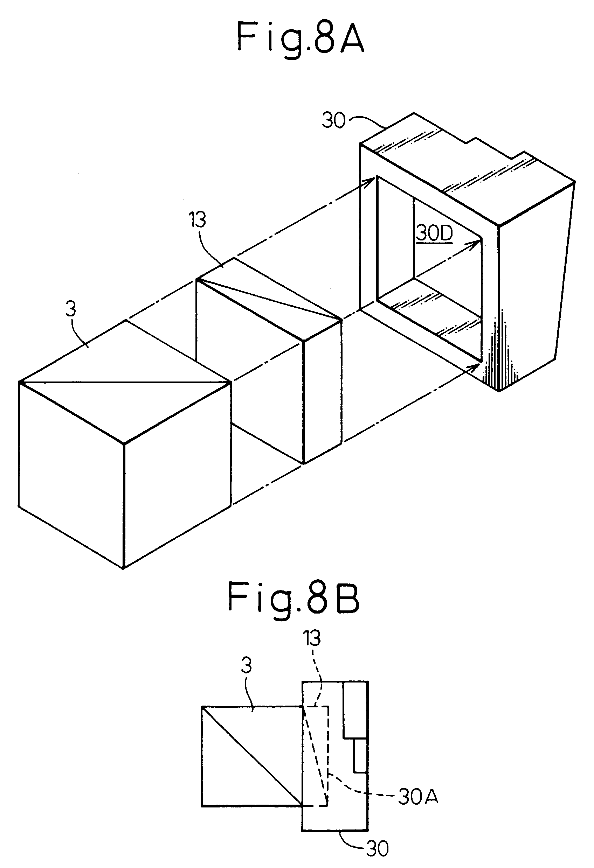

In the modification shown in Fig. 8A, a recess 30D for receiving the polarization beam splitter 13 is formed on the side of the wave surface splitter 30 entered by the laser beam. As shown in Fig. 8B, the polarization beam splitter 13 is fitted in the recess 30D. Thus, with the beam splitter 3 arranged adjacently to the wave surface splitter 30, the three component parts are integrated with each other. In this way, by forming the beam splitter 3, the polarization beam splitter 13 and the wave surface splitter 30 integrally with each other, the internal space of the optical head base 38 can be reduced for a smaller size of the optical head base 38.

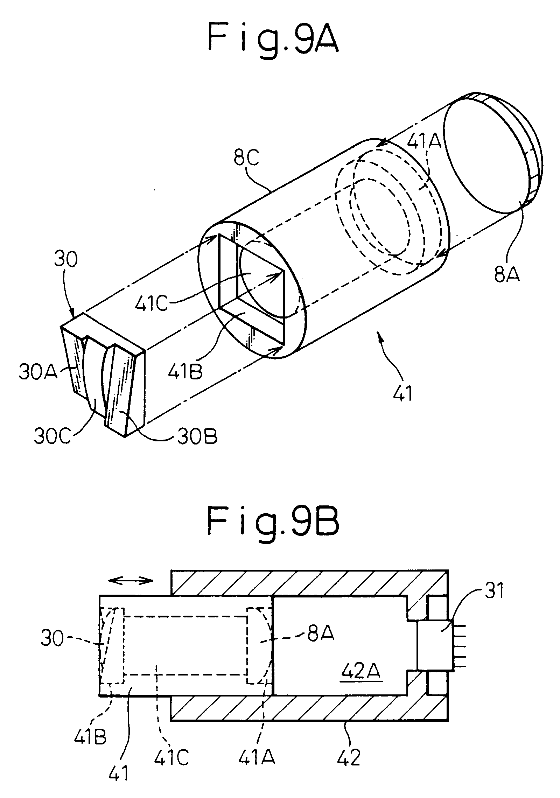

In the modification shown in Fig. 9A, the holder 8C of the detection lens 8A is formed cylindrically. A lens mounting hole 41A for housing the detection lens 8A is formed at an end of the holder 8C, and a rectangular hole 41B for housing the wave surface splitter 30 is formed at the other end thereof. The bottoms of the lens mounting hole 41A and the rectangular hole 41B communicate with each other by way of a through hole 41C. The holder 8C having the detection lens 8A and the wave surface splitter 30 mounted thereon constitutes a movable unit 41, which, as shown in Fig. 9B, is slidably inserted in a guide hole 42A formed in a fixed unit 42. The servo/data detection sensor 31 is mounted on the side of the fixed unit 42 far from the movable unit 41. The movable unit 41 inserted in the fixed unit 42 is moved in the guide hole 4A and adjusted in such a position that the laser beam split by the wave surface splitter 30 and reduced by the detection lens 8A is focused on the servo/data detection sensor 31.

As described above, the detection lens 8A and the wave surface splitter 30 are integrated by use of the holder 8C thereby to form the movable unit 41, which is in turn is built in the fixed unit 42 with the servo/data detection sensor 31 mounted at an end thereof. In this way, the focus adjustment of the laser beam is facilitated.

In recent years, the rotational speed of the optical disk providing a recording medium has increased due to the higher performance of the optical disk device. With the increase in rotational speed, a higher frequency band has come to be required for the data signal and the servo signal contained in the laser beam. Higher frequency bands, however, have posed the problem of noise generated in the circuit for processing these signals. This noise is called circuit-mounting noise and is generated by the integrated circuits mounted on the substrate for processing the data signal and the servo signal.

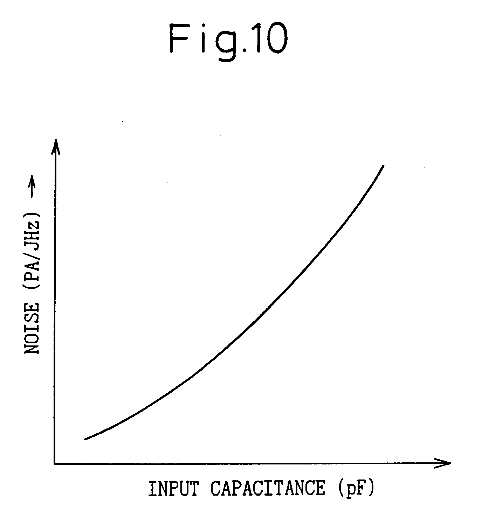

The input capacitance of the component elements including the sensors for detecting the data signal and the servo signal up to the first-stage amplifier (LSI) for amplifying the output signals from these sensors contribute considerably to the circuit-mounting noise. Specifically, as shown in Fig. 10, the noise is known to increase with the input capacitance of the component elements including the sensors up to the first-stage amplifier.

A method considered effective for reducing the input capacitance of the circuits including the sensors up to the first-stage amplifier consists of minimizing the photo-detector of each sensor in order to reduce the capacitance of the sensors themselves or in reducing the stray capacitance of the lead wire from the sensors up to the first-stage amplifier as much as possible.

An explanation will be given of an embodiment of the invention for reducing the stray capacitance from the sensors up to the first-stage amplifier as far as possible.

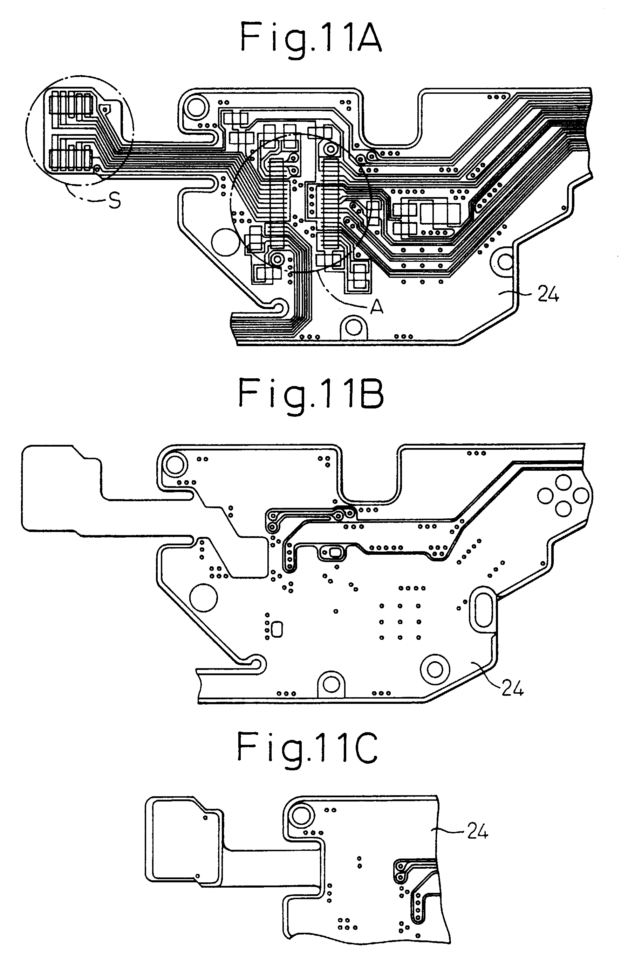

Fig. 11A shows a part of the surface of the flexible circuit board 24 having mounted thereon the servo/data detection sensor 31 and the servo/data first-stage amplifier 23. The servo/data detection sensor 31 is mounted at the portion designated by reference character S and the servo/data first-stage amplifier 23 is mounted at the portion designated by reference character A on the flexible circuit board 24. Fig. 11B is a perspective view of the back surface pattern of the flexible circuit board 24 of Fig. 11A as taken from the front surface thereof. According to this embodiment, a copper foil pattern does not cover the back surface of the portion of the flexible circuit board 24 between the servo/data detection sensor 31 and the input of the servo/data first-stage amplifier 23. Conventionally, a copper foil pattern is also formed on the back surface of this portion of the flexible circuit board 24 as shown in Fig. 11C.

Due to the lack of the copper foil pattern on the portion of the back surface of the flexible circuit board 24 between the servo/data detection sensor 31 and the input of the servo/data first-stage amplifier 23, as described above, no stray capacitance due to the ground pattern or the like appears on the signal line in the portion of the flexible circuit board 24 between the servo/data detection sensor 31 and the input side of the servo/data first-stage amplifier 23.

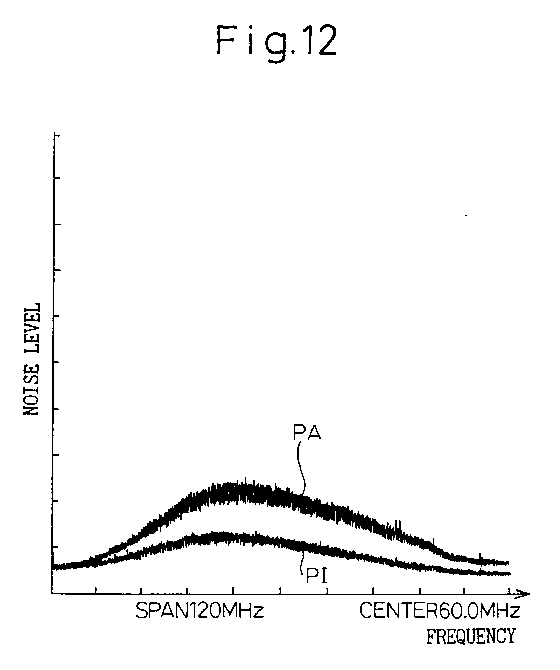

Fig. 12 is a characteristic diagram showing a comparison of noise distributions for the back surface patterns shown in Figs. 11B and 11C. PI designates the noise distribution for the embodiment of Fig. 11B according to the invention, and PA the noise distribution for the example of the prior art shown in Fig. 11C. As can be seen from Fig. 12, the noise PI according to the invention is considerably reduced compared to the noise PA of the prior art. The embodiment has such an effect of improving the noise characteristic that the peak noise for the invention is lower by one half compared to the noise for the prior art. The reason why the noise is reduced by the configuration of Fig. 11B is that in the presence of a conductive layer on the two sides of the flexible circuit board 24, the distance between the conductors on the front and back surfaces is as short as several tens of µm and therefore a stray capacitance is liable to develop.

The foregoing description refers to the case in which the servo/data detection sensor 31 and the servo/data first-stage amplifier 23 are mounted on the flexible circuit board 24. The same can be said of the case where the servo/data detection sensor 31 and the servo/data first-stage amplifier 23 are mounted on an ordinary printed circuit board. In the case where the servo/data detection sensor 31 and the servo/data first-stage amplifier 23 are mounted on an ordinary printed circuit board, the conductive layer on the back surface of the printed circuit board is removed or the servo/data detection sensor 31 and the servo/data first-stage amplifier 23 are connected by wire to each other.

Further, as the optical disk device is improved in performance, the control band of the laser diode of the laser beam source 1 must also be increased. The laser beam source monitor sensor 6 according to the embodiments shown in Figs. 4, 5A, 5B has a frequency band of about several hundred kHz. A method for increasing the frequency band is to condense the laser beam incident on the laser beam source monitor sensor 6 by a condenser lens and to further reduce the size of the photo-detection surface of the laser beam source monitor sensor 6.

The above-mentioned means for reducing the size of the photo-detection surface of the laser beam source monitor sensor 6 is incorporated in the laser beam source monitor unit 36 described with reference to Fig. 6, which includes a condenser lens 26 for condensing the laser beam in the stage immediately before the laser beam source monitor sensor 6.

For example, the light fluxes and the size of the photo-detection surface for the laser beam source monitor sensor 6 according to the first embodiment of Fig. 4 and the second embodiment of Fig. 6 were determined as shown below.

| | Light fluxes | Photo-detection surface size |
|---|---|---|
| First embodiment | ⌀5.0 mm | 2 mm per side |
| Second embodiment | ⌀0.2 mm | ⌀0.6 mm |

According to the first embodiment, a rectangular portion 2 mm per side of the light fluxes 5 mm in diameter is received by a sensor. In the second embodiment, however, in order to increase the frequency band, a laser beam about 0.2 mm in diameter is required to be received by a sensor 0.6 mm in diameter.

For this reason, to simplify the adjustment of the optical axis and the production process, the laser beam source monitor sensor 6 and the condenser lens 26 included in the laser beam source monitor unit 36 of Fig. 6 are preferably integrated with each other as a laser beam source monitor unit rather than being built as separate members in the laser beam source monitor unit 36 and mounted on the optical head base 38.

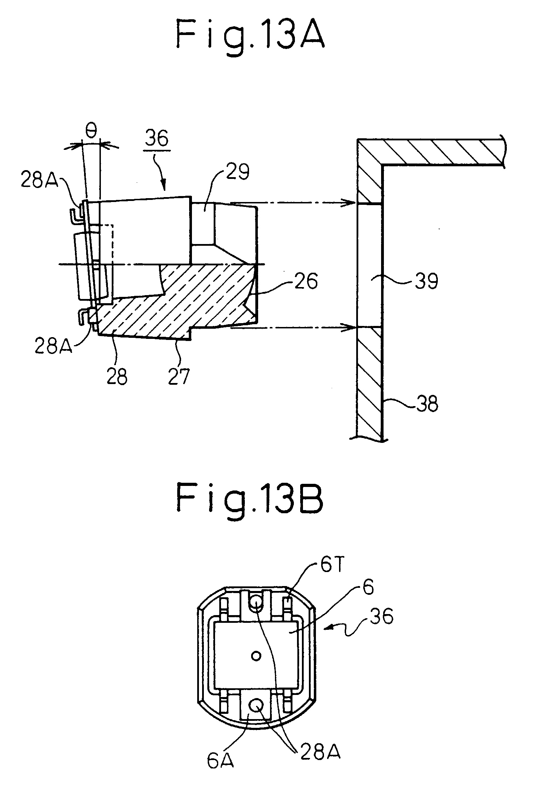

Figs. 13A, 13B show an embodiment in which the laser beam source monitor sensor 6 and the condenser lens 26 are integrated to configure the laser beam source monitor unit 36. As shown in Fig. 13A, according to this embodiment, the condenser lens 26 and the holder 27 are formed of a transparent resin mold. Polycarbonate or amorphous resin is recommended as a material of the mold taking durability into account.

The holder 27 is formed with a fixing member 29 having a profile adapted to be fitted in the mounting hole 39 of the laser beam source monitor unit arranged on the optical head base 38. The laser beam source monitor unit 36 can be mounted on the optical head base 38 by fitting the fixing member 29 in the mounting hole 39. The fixing member 29, after being fitted in the mounting hole 39, can be fixed with adhesive. As an alternative, the outer periphery of the fixing member is tapped, the fixed member 29 is forced into the mounting hole 39, and the laser beam source monitor unit 36 is mounted on the optical head base 38.

Further, the holder 27 of the condenser lens 26 is extended toward the laser beam source monitor sensor 6, which extension has at least two bosses 28. The laser beam source monitor sensor 6 is mounted at the forward ends of the two bosses 28. Due to the difference in length between the two bosses, the laser beam source monitor sensor 6 mounted at the forward ends thereof is tilted by an angle θ with respect to the optical axis of the laser beam. This is in order to prevent the reflected portion of the laser beam incident to the laser beam source monitor sensor 6 from returning to the laser beam source 1.

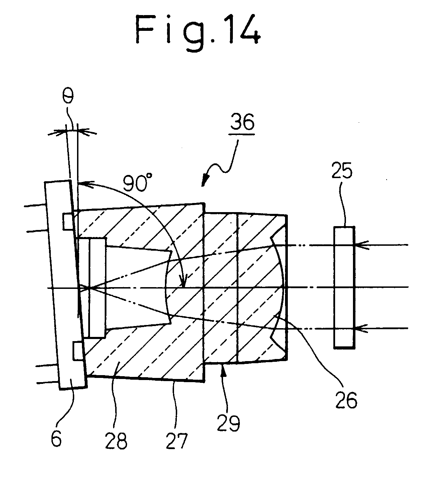

When mounting the laser beam source monitor sensor 6 at the forward ends of the two bosses 28, in order to maintain a margin against a temperature shock or the like, as shown in Fig. 13B, the center of the laser beam reduced to a diameter of about 0.2 mm by the condenser lens 26, is adjusted into registration with the center of the photo-detection surface 0.6 mm in diameter of the laser beam source monitor sensor 6. Fig. 14 shows the path of the laser beam in the laser beam source monitor unit 36. In order for the center of the laser beam to come into registration with the center of the photo-detection surface of the laser beam source monitor sensor 6, highly accurate protrusions 28A, at the forward end of the bosses 28 and the mounting holes 6A of the laser beam source monitor sensor, are secured in advance. One of the mounting holes 6A can be a groove. Reference character 6T designates a terminal of the laser beam source monitor sensor 6.

With the laser beam source monitor unit 6 configured as described above, upon receipt of a data read beam and a data write beam for the optical disk device, a current proportional to the quantity of each of the beams is output. This current is supplied to the laser beam source controller 16 described with reference to Fig. 6 for controlling the emission of the laser beam source 1.

For reducing the current supplied from the laser beam source monitor unit 36 to the laser beam source controller 16 to reduce the power required for the laser beam source controller 16, a method is used to concentrate the quantity of the laser beam input to the laser beam source monitor unit 36. In such a case, a light quantity attenuator 25 is arranged on the laser beam input side of the laser beam source monitor unit 36. An absorption film of chromium or the like can be used as the light quantity attenuator 25. Further, it is possible to electrically reduce the current supplied to the laser beam source controller 16 from the laser beam source monitor unit 36. In this case, a circuit having a resistance component is connected between the input terminal of the laser beam source controller 16 and the ground, so that part of the current supplied to the laser beam source controller 16 by passes the controller 16.

As described above, the laser beam source monitor unit 36 shown in Fig. 6 is made up of the laser beam source monitor sensor 6 formed integrally with the condenser lens 26. As a result, the adjustment of the optical axis and the production process are simplified, thereby reducing the production cost of the optical disk device.

The optical system according to the invention is applicable to not only an optical disk device but also to a data storage device using an optical storage medium such as an optical card.

## Claims

1. An optical data storage device comprising an optical system having the functions of irradiating a laser beam from a laser beam source (1) on an optical storage medium (5), splitting the laser beam reflected and returned by said optical storage medium (5) into a plurality of laser beams, and detecting from each of the split laser beams the on/off state of said laser beam source (1), the data signal recorded in said optical storage medium (5), the focus state of said laser beam on said optical storage medium (5) and the track of said optical storage medium (5) irradiated with said laser beam, characterized in that said detection system for detecting the focus state of said laser beam comprising:
a wave surface splitting element (10) for splitting said return beam into at least two laser beams;
a detection lens (8A) for concentrating the laser beams emitted from said wave surface splitting element (10); and
a focus state detection sensor (11) for detecting whether the laser beam is correctly focused on the recording surface of said optical storage medium (5) based on the light from said detection lens (8A).

2. An optical data storage device according to claim 1, wherein said optical system includes:
a laser beam source (1) for irradiating the laser beam on said optical storage medium,
a first beam splitting element (3) for splitting the laser beam emitted from said laser beam source (1) and the return laser beam from said optical storage medium (5);
a second beam splitting element (7) for splitting one of said return laser beams into two beams;
a data detection system for detecting the data signal recorded in said optical storage medium (5) from one of the laser beams produced from said second beam splitting element (7); and
a servo detection system (12, 13, 14) for detecting the servo signal recorded in said optical storage medium (5) from the other laser beam produced from said second beam splitting element (7);
wherein said servo detection system includes a third beam splitting element for splitting each of said return beams into two beams, a track detection system (8B, 15) for detecting the track of said optical storage medium (5) from one of the laser beams, and a focus state detection system (10, 8A, 11) for detecting the focused state of said laser beam irradiated on said optical storage medium from the other of said laser beams.

3. An optical data storage device according to claim 1 or 2, wherein said wave surface splitting element (10) is mounted integrally on said second beam splitting element (9).

4. An optical data storage device according to claim 1 or 2, wherein said wave surface splitting element (10) is mounted on the holder (8C) of said detection lens (8A).

5. An optical data storage device according to claim 1, wherein said optical system includes
a laser beam source (1) for irradiating a laser beam on said optical storage medium;
a first beam splitting element (3) for splitting the laser beam emitted from said laser beam source and the laser beam returned from said optical storage medium;
a polarization beam splitting element (13) for splitting one of said return beams into two laser beams;
a wave surface splitting element (30) for splitting each of the laser beams produced from said polarization beam splitting element (13) into three laser beams; and
a data/servo detector (31) for detecting the data signal and the servo signal recorded in said optical storage medium (5) from the six laser beams produced from said wave surface splitting element (30);
wherein said first beam splitting element (3), said polarization beam splitting element (13), said wave surface splitting element (30), said detection lens (8A) and said data/servo detector (31) are arranged in alignment, and wherein said data/servo detector (31) is configured of a single sensor divided into a multiplicity of portions for detecting the servo signal and the data signal produced from said optical storage medium (5).

6. An optical data storage device according to claim 5,
wherein said first beam splitting element (3), said polarization beam splitting element (13), said wave surface splitting element (30) and said detection lens (8A) are housed in an optical head base (38).

7. An optical data storage device according to claim 5 or 6,
wherein said first beam splitting element (3), said polarization beam splitting element (13) and said wave surface splitting element (30) are formed integrally with each other.

8. An optical data storage device according to claim 5 or 6,
wherein said wave surface splitting element (30) is integrally incorporated in the holder (8C) of said detection lens (8A) to form a movable unit (41), said movable unit (41) is slidably incorporated in a fixed unit (42) with said data/servo detector (31) mounted at an end thereof, and said movable unit is moved thereby to adjust the focus of the laser beam emitted from said detection lens (8A) on said data/servo detector (31).

9. An optical data storage device according to any one of claims 1 to 8,
wherein said sensors for detecting the data signal, the focus signal and the track are arranged on the same flexible circuit board (24) as an amplifier for amplifying the output signals from said sensors, and the portion of said flexible circuit board printed with a signal line between said sensors and said amplifier is configured of a single layer of the board.

10. An optical data storage device according to claim 5 or 6,
wherein a condenser lens (26) and a laser beam source monitor sensor (6) are arranged on the path of the other return laser beam produced from said first beam splitting element (3).

11. An optical data storage device according to claim 10,
wherein said condenser lens (6) is formed as a transparent resin mold having at least two legs (28) protruded therefrom, and said laser beam source monitor sensor (6) is mounted at the forward ends of said legs (28) thereby to form a monitor unit (36).

12. An optical data storage device according to claim 11,
wherein said laser beam source monitor sensor (6) is mounted at a predetermined angle to the optical axis of said condenser lens (26).

13. An optical data storage device according to claim 11 or 12,
wherein said transparent resin is selected one of polycarbonate and an amorphous material.

14. An optical data storage device according to claim 11 or 12,
wherein said monitor unit (36) is fixed by being fitted in said optical head base (38).

15. An optical data storage device according to claim 11 or 12,
wherein the surface of said monitor unit (36) mounted on said optical head base (38) has a tap, and said monitor unit (36) is coupled to said optical head base (38) by tapping.

16. An optical data storage device according to claim 14 or 15,
wherein said monitor unit (36) is fixed by an adhesive after being mounted on said optical head base (38).

17. An optical data storage device according to any one of claims 11 to 16, further comprising light quantity attenuation means (25) arranged at a beam-incident end of said monitor unit (36) for regulating the laser beam quantity.

18. An optical data storage device according to claim 17,
wherein said light quantity attenuation means (25) includes a light absorption film of chromium.
